# EUROPEAN PATENT APPLICATION

(11) **EP 2 897 034 A1**
(43) Date of publication of application: **22.07.2015**
(21) Application number: 14178362.1
(22) Date of filing: 24.07.2014
(51) Int. Cl.: G06F 3/0488, G06F 3/03, H04M 1/725, G06F 3/044, A63F 13/2145

(54) **Method, system, electronic device and peripheral device of communication**

(30) Priority: 27.12.2013 TW 102148609
(71) Applicant: Quanta Computer, Inc, Taoyuan Shien (TW)
(72) Inventor: Shih, Yu-Liang, Tao Yuan Shien (TW); Chang, Jung-Wen, Tao Yuan Shien (TW); Huang, Yi-Pin, Tao Yuan Shien (TW)
(74) Representative: Michalski Hüttermann & Partner Patentanwälte mbB

(57) **Abstract**

The present invention discloses a communication system including a first peripheral device and an electronic device. The first peripheral device includes a touch-signal generator. The touch-signal generator is arranged to produce a predetermined touch-signal stream. The electronic device includes a touch-sensing device and a processing unit. The touch-sensing device is arranged to receive the predetermined touch-signal stream produced by the first peripheral device. The processing unit is configured to read the predetermined touch-signal stream.

## Description

### CROSS REFERENCE TO RELATED APPLICATIONS

This Application claims priority of Taiwan Patent Application No. 102148609, filed on Dec. 27, 2013, the entirety of which is incorporated by reference herein.

### BACKGROUND OF THE INVENTION

### Field of the Invention

The present invention is related to a communication method, and in particular to a communication method using touch-signal stream.

### Description of the Related Art

Presently, mobile devices are highly developed and multifunctional. For example, handheld devices such as mobile phones and tablets are capable of conducting telecommunications, receiving and transmitting e-mails, maintaining social networks, managing contacts, and playing media. Hence, users can implement various applications on their mobile devices, such as simple phone calls, social network interaction, or commercial transactions. Therefore, mobile devices have become necessities in people's lives.

There are many electronic devices equipped with touch-sensitive display units (such as a touch-screen display), allowing users to enter commands through the touch-screen display. There is also an increase in the variety of applications using such touch-screen technology, along with explanations on how it is used, making the application of electronic devices more multifunctional and fun.

### BRIEF SUMMARY OF THE INVENTION

A detailed description is given in the following embodiments with reference to the accompanying drawings.

The present invention discloses a communication system including a first peripheral device and an electronic device. The first peripheral device includes a touch-signal generator. The touch-signal generator is arranged to produce a predetermined touch-signal stream. The electronic device includes a touch-sensing device and a processing unit. The touch-sensing device is arranged to receive the predetermined touch-signal stream produced by the first peripheral device. The processing unit is configured to read the predetermined touch-signal stream.

The present invention further discloses a peripheral device outputting touch signals and receiving light signals. The peripheral device includes a touch-signal generator, a light sensor and a processing unit. The touch-signal generator is arranged to produce a predetermined touch-signal stream, and transmit the predetermined touch-signal stream to an electronic device. The light sensor is arranged to receive a predetermined light signal from the electronic device. The processing unit is configured to read the predetermined light signal and operate in response to the predetermined light signal.

The present invention further discloses an electronic device outputting touch signals and receiving light signals. The electronic device includes a touch-sensing device, a display device and a processing unit. The touch-sensing device is arranged to receive a predetermined touch-signal stream from a first peripheral device. The display device is arranged to produce a predetermined light signal, and transmit the predetermined light signal to the first peripheral device. The processing unit is arranged to read the predetermined touch-signal stream and operate in response to the predetermined touch-signal stream.

The present invention further discloses a communication method applied to a communication system. The communication method includes: receiving an initial touch signal from a first peripheral device when a first peripheral device is placed on an interactive surface; producing an initial light signal and transmitting the initial light signal to the first peripheral device when the initial touch signal is received; and determining whether a predetermined touch-signal stream is received from the first peripheral device after the initial light signal is transmitting to the first peripheral device.

### BRIEF DESCRIPTION OF THE DRAWINGS

The present invention can be more fully understood by reading the subsequent detailed description and examples with references made to the accompanying drawings, wherein:
FIG. 1 is a schematic diagram illustrating an embodiment of a communication system of the present invention;
FIG. 2 is a schematic diagram of touch-signal streams of the present invention;
FIG. 3A-3C are a schematic diagram illustrating a plurality of embodiments of a peripheral device of the present invention;
FIG. 4 is a schematic diagram illustrating an embodiment of a communication system of the present invention;
FIG. 5 is a flowchart of a communication method according to an embodiment of the present invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

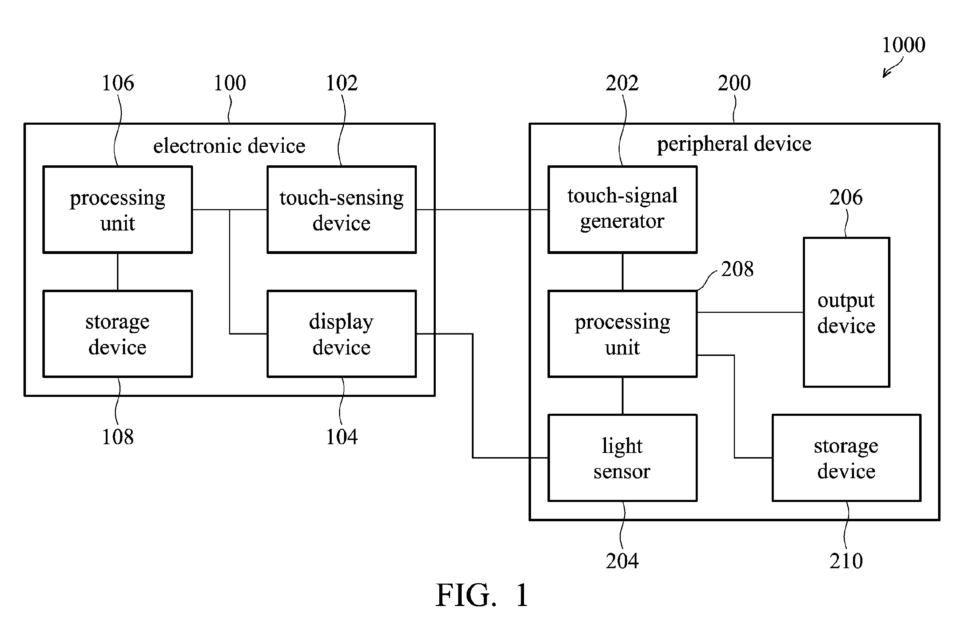

FIG. 1 is a schematic diagram illustrating an embodiment of a communication system of the present invention. The communication system 1000 includes a peripheral device 200 and an electronic device 100, but it is not limited thereto. The signals between the peripheral device 200 and the electronic device 100 of the communication system 1000 are touch signals and light signals, wherein the peripheral device 200 outputs touch signals and receives light signals, and the electronic device 100 receives touch signals and outputs light signals.

The electronic device 100 can be a laptop, a smartphone, or a PDA, but it is not limited thereto. The electronic device 100 may be practiced with other computer system configurations, including hand-held devices, multiprocessor-based, microprocessor-based or programmable consumer electronics, network PCs, minicomputers, mainframe computers, and the like. The electronic device 100 includes a touch-sensing device 102, a display device 104, a processing unit 106 and a storage device 108.

The touch-sensing device 102 is arranged to receive an initial touch signal or a predetermined touch-signal stream corresponding to the peripheral device 200 from the peripheral device 200.

The display device 104 is arranged to produce an initial light signal and a plurality of predetermined light signals corresponding to different commands for the peripheral device 200. For example, the initial light signal can be a light signal that flashes three times in a predetermined frequency, but it is not limited thereto. In other embodiments, the initial light signal can be a light signal that flashes five times in a predetermined frequency or a light signal with predetermined color and brightness. The predetermined light signal can vary in flash frequency, brightness, or color corresponding to different commands and applications, but it is not limited thereto. It should be noted that the touch-sensing device 102 may be embedded in the pixel units of the display device 104 or covered on the surface of the display device 104, but it is not limited thereto. Namely, the touch-sensing device 102 and the display device 104 constitute a touch panel, wherein the touch panel may be a capacitive touch panel, resistive touch panel, or projected capacitive touch panel, etc., but it is not limited thereto. For example, the capacitive touch panel is arranged to detect touch events and the positions of the touch events according to the capacitance change between the capacitive touch panel and the touch-signal generator 202, users' hands or a touch pen to produce the corresponding signal to the processing unit 106. The resistive touch panel is arranged to detect touch events and the positions of the touch events according to the resistance change between the touch-signal generator 202 or objects and the resistive touch panel to produce the corresponding signal to the processing unit 106. The projected capacitive touch panel is arranged to detect touch events and the position of the touch events according to the capacitive sensing in response to the touch event performed by the touch-signal generator 202, the users' hands, or conductive objects on the Indium Tin Oxide (ITO) transparent electrode of the projected capacitive touch panel to produce the corresponding signal to the processing unit 106.

The processing unit 106 may include a central-processing unit (CPU), or a plurality of parallel processing units related in a parallel processing environment. It should be noted that, in the present invention, the processing unit 106 may be implemented in a single chip or in a plurality of chips. In one embodiment, the processing unit 106 is configured to read the patterns of the predetermined touch-signal stream and the initial touch signal which are received from the peripheral device 200, and operate in response to the patterns of the predetermined touch-signal stream and the initial touch signal. Moreover, the processing unit 106 is further configured to enable the display device 104 to produce an initial light signal when the initial touch signal is received. Next, the processing unit 106 is further configured to determine whether the predetermined touch-signal stream received by the touch-sensing device 102 from the peripheral device 200 meets one of a plurality of predetermined patterns stored in the storage device 108 for identifying whether the peripheral device 200 is certified and identifying the types and application of the certified peripheral device 200.

The storage device 108 has an identification table arranged to store the corresponding relationship between the predetermined patterns and a plurality of peripheral devices compatible with the electronic device 100 and applications of the predetermined patterns. For example, the storage device 108 can include a read only memory (ROM), a flash ROM and/or a random access memory (RAM), arranged to store the programs used for executing by the processing unit 106. In some embodiments, the program includes the routines, program, object, component, Web Service, etc.

The peripheral device 200 can take have specific shapes and sizes, using the applications of the electronic device 100. For example, the peripheral device 200 can be designed into the shape of a key, a doll, or other special designs, but it is not limited thereto. The peripheral device 200 includes a touch-signal generator 202, a light sensor 204, an output device 206, a processing unit 208 and a storage device 210.

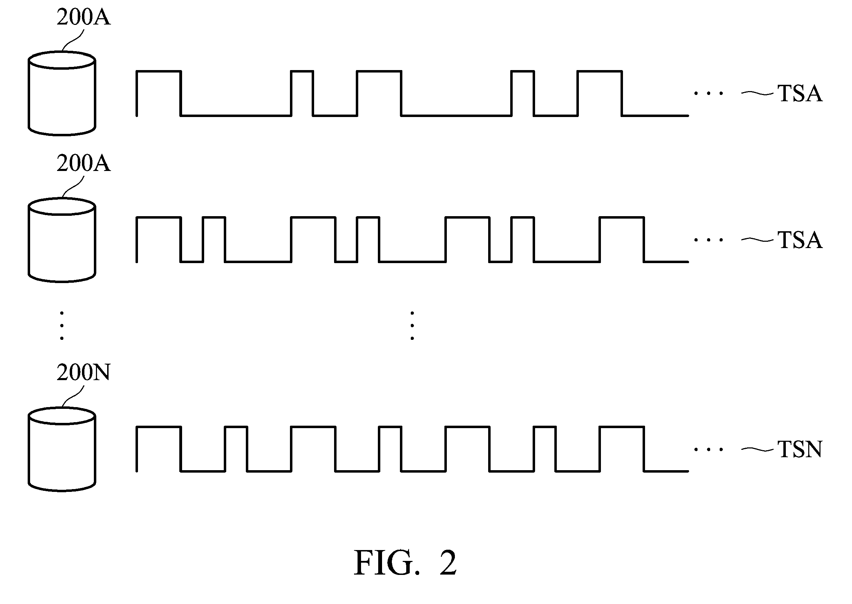

The touch-signal generator 202 is arranged to produce an initial touch signal and the predetermined touch-signal streams corresponding to the peripheral device 200, and transmit the produced initial touch signal and the predetermined touch-signal streams corresponding to the peripheral device 200 to the electronic device 100. In one of the embodiments, the touch-signal generator 202 is a conductive rubber arranged to touch an interactive surface of the electronic device 100, and produce touch signals, which are similar to the signals produced by a human finger or other touch devices, by a switch coupled to a power source, but it is not limited thereto. For example, the initial touch signal can be a touch signal that pulls up the voltage level three times in a predetermined frequency, but it is not limited thereto. In other embodiments, the initial touch signal can be the touch signal that pulls up the voltage level five times in a predetermined frequency. Moreover, the predetermined touch-signal stream produced by the peripheral device 200 has a plurality of touch signals, and each of the touch signals is constituted by a high level and a low level, wherein the combination of the lengths of the high levels and the low levels of the touch signals construct a predetermined pattern, as shown in FIG. 2. It should be noted that the communication system 1000 may include a plurality of peripheral devices, as shown in FIG. 2, wherein the number of peripheral devices 200A-200N is not limited thereto. The different peripheral devices 200A-200N may include different applications. For example, the different peripheral devices 200A-200N may be the keys of different levels of a game. The users need the different peripheral devices 200A-200N to unlock the levels to play the game, but it is not limited thereto. In other embodiments, the different peripheral devices 200A-200N may be the different pieces or characters in a game, but it is not limited thereto. In one embodiment, the electronic device 100 may execute the corresponding application according to the peripheral devices 200A-200N, respectively. In another embodiment, the electronic device 100 may execute the corresponding application according to the combination of the connected peripheral devices 200A-200N. Moreover, the patterns of the predetermined touch-signal streams TSA-TSN of the peripheral devices 200A-200N are different from each other. The electronic device 100 may identify the connected peripheral devices 200A-200N according to the received predetermined touch-signal stream.

It should be noted that the touch-signal generator 202 produces the initial touch signal when the peripheral device 200 is placed on the touch-sensing device 102. For example, the peripheral device 200 further includes a sensing device arranged to determine whether the peripheral device 200 is placed on the touch-sensing device 102 and enable the touch-signal generator 202 to produce the initial touch signal when the peripheral device 200 is placed on the touch-sensing device 102, but it is not limited thereto. The peripheral device 200 may also include a switch (not shown). When the switch is enabled by users, the switch enables the touch-signal generator 202 to produce the initial touch signal according to the enable signal of the switch.

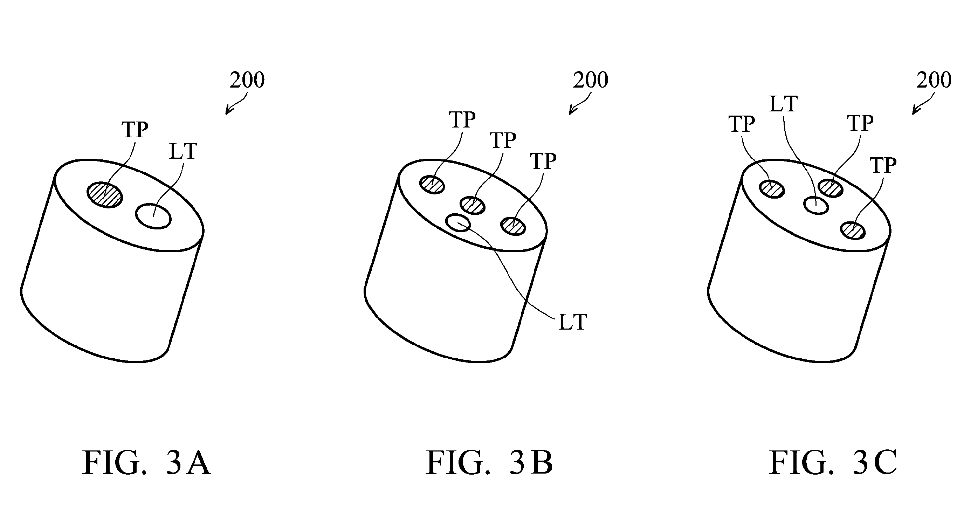

Moreover, the touch-signal generator 202 is implemented on the surface connecting the peripheral device 200 and the electronic device 100 to produce the initial touch signal and the predetermined touch-signal stream on the touch-sensing device 102 of the electronic device 100, as shown in FIG. 3A-3C. In the embodiment of FIG. 3A, the peripheral device 200 has an underside, and the touch-signal generator 202 has a touch point TP arranged to connect the interactive surface ISF of the electronic device 100 on the underside, but it is not limited thereto. In the embodiment of FIG. 3B, the peripheral device 200 has an underside, and the touch-signal generator 202 has three touch points TP arranged in a line on the underside, and the three touch points TP are arranged to connect with the interactive surface ISF of the electronic device 100. Moreover, in the embodiment of FIG. 3C, the peripheral device 200 has an underside, and the touch-signal generator 202 has three touch points TP arranged in a triangle on the underside, and the three touch points TP are arranged to connect with the interactive surface ISF of the electronic device 100. It should be noted that, in one embodiment, the processing unit 106 may detect the opposite direction between of the peripheral devices 200 placed on the interactive surface ISF according to the positions of the peripheral devices 200. In another embodiment, when the touch-signal generator 202 of the peripheral device 200 has at least two touch points TP, the touch-signal generator 202 may enable the different touch points TP to produce different touch signals, such that the processing unit 106 can locate the positions of the respective touch points TP according to the different touch signals to determine the absolute direction of the peripheral device 200. In another embodiment, when the touch-signal generator 202 of the peripheral device 200 has at least three touch points TP, the touch-signal generator 202 may directly determine the absolute direction of the peripheral device 200 according to the opposite directions of the touch points TP. For example, when the three touch points TP on the underside constitute an acute isosceles triangle, the processing unit 106 can determine the absolute direction of the peripheral device 200 according to the direction of the acute isosceles triangle, but it is not limited thereto.

The light sensor 204 is arranged to receive the initial light signal from the electronic device 100, as shown in FIGs. 3A-3C. In the embodiments of the 3A-3C, the peripheral device 200 has an underside, and the light sensor 204 has a light sensing point LT on the underside. The light sensing point LT is arranged to receive the light signal from the electronic device 100. For example, the light sensor 204 can be a light sensor or a phototransistor, but it is not limited thereto. In another embodiment, the light sensor 204 is further arranged to receive the predetermined light signals from the electronic device 100. For example, the light sensor 204 can be a photo-resistor arranged to detect brightness, color and frequency of the initial light signal and the predetermined light signals. It should be noted that, in one of the embodiments, the light sensor 204 is implemented on the surface connecting the peripheral device 200 and the electronic device 100, and the light sensor 204 is arranged to receive the light signals produced by the display device 104 of the electronic device 100, but it is not limited thereto. In other embodiments, the light sensor 204 can also be arranged in other places which can receive the light signal of the display device 104 of the electronic device 100.

The output device 206 is arranged to provide the corresponding output signals according to the received predetermined light signals and/or the initial light signal for users. For example, the output device 206 can be at least one LED implemented in the peripheral device 200, wherein the LED is arranged to provide the different light signals in response to the different situations for users, but it is not limited thereto. The output device 206 can also be a display screen or a speaker.

The processing unit 208 may include a central-processing unit (CPU), or a plurality of parallel processing units related in a parallel processing environment. It should be noted that, in the present invention, the processing unit 208 may be implemented in a single chip or in a plurality of chips. In one of the embodiments, the processing unit 208 is configured to read the patterns of the initial light signal and the predetermined light signals received by the light sensor 204, and operate in response to the patterns of the initial light signal and the predetermined light signals. For example, the processing unit 208 may read the patterns of the received initial light signal and the predetermined light signals according to the brightness, color, and frequency of the initial light signal and the predetermined light signals. In one embodiment, the processing unit 208 is configured to enable the touch-signal generator 202 to produce the predetermined touch-signal stream when the initial light signal is received from the electronic device 200, such that the electronic device 200 may identify the peripheral device 200 according to the predetermined touch-signal stream. In other embodiments, the processing unit 208 is further configured to operate in response to the predetermined light signal received from the electronic device 200. For example, the processing unit 208 may enable the output device 206 to produce an output signal corresponding to the received predetermined light signal for users.

The storage device 210 can include a read only memory (ROM), a flash ROM and/or a random access memory (RAM), arranged to store the programs used for executing by the processing unit 208. In some embodiments, the program includes the routines, program, object, component, Web Service, etc. In one embodiment, the storage device 210 may also include an identification table arranged to store a corresponding relationship between the light signals and applications.

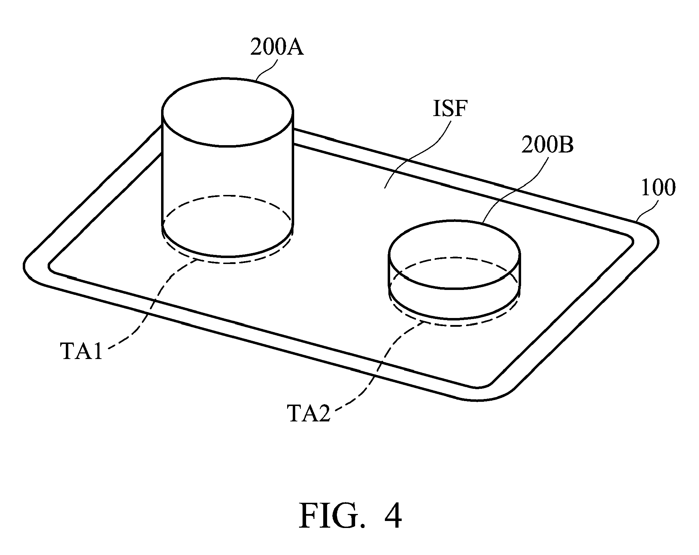

FIG. 4 is a schematic diagram illustrating an embodiment of a communication system of the present invention. In one embodiment, the processing unit 106 can be configured to execute an application, such as game software, but it is not limited thereto. In other embodiments, the application may be financial software, and the peripheral device 200 may be a personal key. When the game software requires the peripheral device 200, the processing unit 106 determines whether the initial touch signal is received from the peripheral device 200, but it is not limited thereto. In other embodiments, the processing unit 106 may determine whether the initial touch signal is received every predetermined period without being required by the game software. For example, the processing unit 106 may determine whether the initial touch signal is received during the execution of the application. In other embodiments, the processing unit 106 may also determine whether the initial touch signal is received in the operation system (OS), and launch the corresponding application when the initial touch signal is received. For example, the electronic device 100 may be a tablet having a touch panel with an interactive surface ISF. The peripheral device 200A and the peripheral device 200B are placed on the area TA1 and the area AT2, respectively, when the electronic device 100 executes the game software. The area TA1 and the area TA2 can be determined by the application, and the number of areas is not limited thereto in the present invention. In other embodiments, the peripheral device can be placed on every area of the interactive surface ISF, and the processing unit 106 is configured to determine the positions of the peripheral device 200A and the peripheral device 200B on the interactive surface ISF according to the received initial touch signal or the predetermined touch-signal streams, and define the area under the peripheral device 200A and the peripheral device 200B as the area TA1 and the area TA2. It should be noted that, in one embodiment, the user may directly place the peripheral device 200A on area TA1, and the touch-signal generator 202 of the peripheral device 200A will produce the initial touch signal on the area TA1 when it is placed on the area TA1, but it is not limited thereto. In another embodiment, the user needs to turn on a switch (not shown) of the peripheral device 200A to enable the touch-signal generator 202 to produce the initial touch signal before placing the peripheral device 200A on the area TA1. The initial touch signal can be the touch signal that pulls up the voltage level three times in a predetermined frequency, but it is not limited thereto. In other embodiments, the initial touch signal can be the touch signal that pulls up the voltage level five times in a predetermined frequency. It should be noted that the peripheral device 200A starts to detect whether the initial light signal is received from the peripheral device 200A after transmitting the initial touch signal. When the processing unit 106 determines that the initial touch signal is received from the peripheral device 200 of the touch-sensing device 102, the processing unit 106 enables the display device 104 to produce the initial light signal on the area TA1, and enable the touch-sensing device 102 to detect whether the area TA1 has received the predetermined touch-signal stream after the initial light signal is transmitted. Next, when the processing unit 208 of the peripheral device 200A receives the initial light signal of the light sensor 204 from the area TA1, the processing unit 208 enables the touch-signal generator 202 to produce the predetermined touch-signal stream TSA on the area TA1 and detect whether the area TA1 receives the predetermined light signal from the electronic device 100. When the touch-sensing device 102 of the electronic device 100 receives the predetermined touch-signal stream TSA from the peripheral device 200A, the processing unit 106 determines whether the pattern of the predetermined touch-signal stream TSA meets one of the plurality of predetermined patterns stored in the storage device 108 to confirm whether the peripheral device 200 A is certified and identifying the types and application of the certified peripheral device 200A. When the processing unit 106 determines that the pattern of the predetermined touch-signal stream TSA meets one of the plurality of predetermined patterns stored in the storage device 108, the processing unit 106 enables the display device 104 to produce the predetermined light signal on area TA1. When the light sensor 204 of the peripheral device 200A receives the predetermined light signal produced by the display device 104 from the area TA1, the peripheral device 200A stops producing the predetermined touch-signal stream TSA and enables the output device 206 to provide the corresponding signal for users, wherein the corresponding signal represents the identification being complete, but it is not limited thereto.

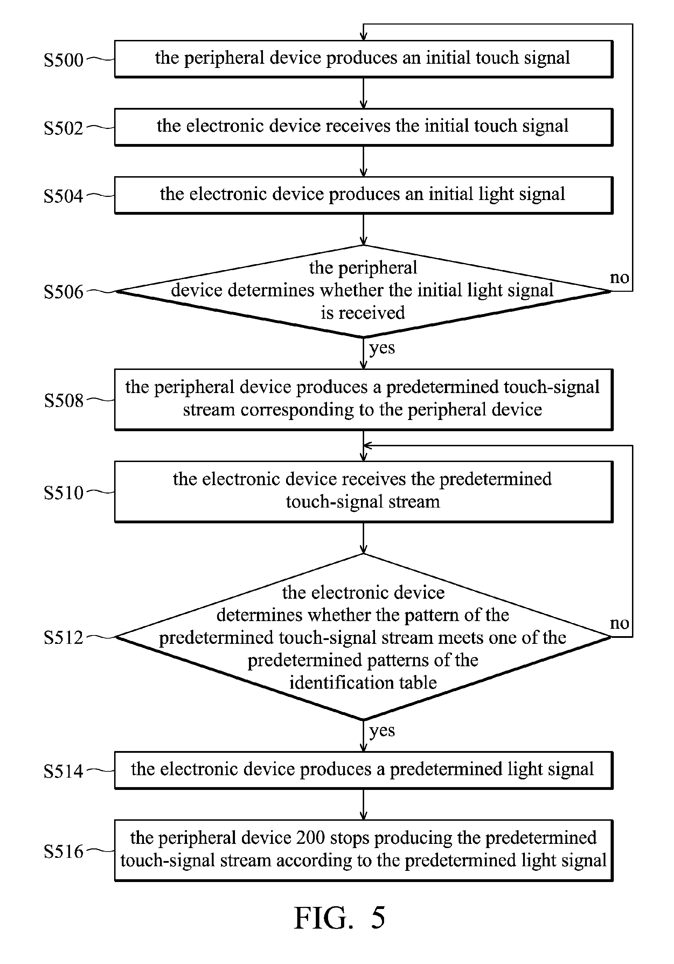

FIG. 5 is a flowchart of a communication method according to an embodiment of the present invention. The communication method is applied to the communication system 1000 of FIG. 1. The process starts at step S500.

In step S500, the touch-signal generator 202 of the peripheral device 200 produces an initial touch signal, and transmits the initial touch signal to the electronic device 100. In one embodiment, the touch-signal generator 202 produces the initial touch signal when the peripheral device 200 is placed on the touch-sensing device 102. In another embodiment, the peripheral device 200 may also include a switch (not shown). When the switch is enabled by users, the switch enables the touch-signal generator 202 to produce the initial touch signal according to the enable signal of the switch.

Next, in step S502, the touch-sensing device 102 of the electronic device 100 receives the initial touch signal.

Next, in step S504, the processing unit 106 of the electronic device 100 enables the display device 104 to produce the initial light signal, transmits the initial light signal to the peripheral device 200, and enables the touch-sensing device 102 to detect whether the predetermined touch-signal stream is received from the peripheral device 200 after the initial light signal is transmitted.

Next, in step S506, the processing unit 208 of the peripheral device 200 determines whether the light sensor 204 receives the initial light signal. When the light sensor 204 receives the initial light signal, the process goes to step S508, otherwise, the process returns to step S500 and the touch-signal generator 202 of the peripheral device 200 is arranged to produce the initial touch signal for transmitting to the electronic device 100 again. For example, the processing unit 208 of the peripheral device 200 may determine whether the light sensor 204 is received within a predetermined time. When the light sensor 204 is not received within the predetermined time, the process returns to step S500, but it is not limited thereto. In step S508, the processing unit 208 of the peripheral device 200 enables the touch-signal generator 202 to produce the predetermined touch-signal stream corresponding to the peripheral device 200 and transmit the predetermined touch-signal stream to the electronic device 100. The predetermined touch-signal stream has a plurality of touch signals, and each of the touch signals is constituted by a high level and a low level, wherein the combination of the lengths of the high levels and the low levels of the touch signals construct a predetermined pattern.

Next, in step S510, the touch-sensing device 102 of the electronic device 100 receives the predetermined touch-signal stream from the peripheral device 200.

Next, in step S512, the processing unit 106 of the electronic device 100 reads the pattern of the predetermined touch-signal stream, and determines whether the pattern of the predetermined touch-signal stream meets one of the predetermined patterns of the identification table. When the pattern of the predetermined touch-signal stream meets one of the predetermined patterns of the identification table, the process goes to step S514, otherwise, the process returns to the step S510, and the touch-sensing device 102 of the electronic device 100 continuous to receive the predetermined touch-signal stream from the peripheral device 200.

In step S514, the processing unit 106 of the electronic device 100 enables the display device 104 to produce the predetermined light signal representing the identification being complete, and the electronic device 100 sends the predetermined light signal to the peripheral device 200.

Next, in step S516, the processing unit 208 of peripheral device 200 enables the touch-signal generator 202 to stop producing the predetermined touch-signal stream according to the predetermined light signal. The process ends at step S516. In another embodiment, the processing unit 208 is further configured to enable the output device 206 to provide the output signal according to the predetermined light signal for users, wherein the output signal indicates that the identification is complete.

The communication system 1000 and the communication method of the present invention may communicate by touch signal. Moreover, the communication system 1000 and the communication method can identify whether the peripheral devices 200A-200N are approved and identify each of the peripheral devices 200A-200N. Moreover, the communication system 1000 and the communication method can also execute the corresponding application in response to the combination of the peripheral devices.

Data transmission methods, or certain aspects or portions thereof, may take the form of program code (i.e., executable instructions) embodied in tangible media, such as floppy diskettes, CD-ROMS, hard drives, or any other machine-readable storage medium, wherein, when the program code is loaded into and executed by a machine such as a computer, the machine thereby becomes an apparatus for practicing the methods. The methods may also be embodied in the form of program code transmitted over some transmission medium, such as electrical wiring or cabling, through fiber optics, or via any other form of transmission, wherein, when the program code is received and loaded into and executed by a machine such as a computer, the machine becomes an apparatus for practicing the disclosed methods. When implemented on a general-purpose processor, the program code combines with the processor to provide a unique apparatus that operates analogously to application-specific logic circuits.

While the invention has been described by way of example and in terms of the preferred embodiments, it is to be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A communication system, comprising:
a first peripheral device, comprising:
a touch-signal generator, arranged to produce a predetermined touch-signal stream; and
an electronic device, comprising:
a touch-sensing device, arranged to receive the predetermined touch-signal stream produced by the first peripheral device; and
a processing unit, configured to read the predetermined touch-signal stream.

2. The communication system as claimed in claim 1, wherein the predetermined touch-signal stream produced by the first peripheral device has a plurality of touch signals, and each of the touch signals is constituted by a high level and a low level, wherein the combination of lengths of the high levels and the low levels of the touch signals construct a first predetermined pattern.

3. The communication system as claimed in claim 2, wherein the electronic device further comprises:
a storage device, arranged to store a plurality of predetermined patterns and an identification table, wherein the predetermined patterns comprise the first predetermined pattern, and the identification table is arranged to store a corresponding relationship between the predetermined patterns and a plurality of peripheral devices compatible with the electronic device and applications of the predetermined patterns, wherein
the processing unit is further configured to determine whether the predetermined touch-signal stream received from the first peripheral device meets one of the predetermined patterns for identifying the first peripheral device, wherein the peripheral devices comprise the first peripheral device, and the processing unit is further configured to execute the application corresponding to the first peripheral device when the first peripheral device is identified.

4. The communication system as claimed in claim 1, wherein the electronic device further comprises a display device arranged to produce a predetermined light signal and transmit the predetermined light signal to the first peripheral device, and each of the peripheral devices further comprises:
a light sensor, arranged to receive the predetermined light signal; and
a processing unit, arranged to read the predetermined light signal and operate in response to the predetermined light signal.

5. A peripheral device, outputting touch signals and receiving light signals, wherein the peripheral device comprises:
a touch-signal generator, arranged to produce a predetermined touch-signal stream, and transmit the predetermined touch-signal stream to an electronic device;
a light sensor, arranged to receive a predetermined light signal from the electronic device; and
a processing unit, configured to read the predetermined light signal and operate in response to the predetermined light signal.

6. The peripheral device as claimed in claim 5, wherein the processing unit is configured to read the predetermined light signal according to the frequency and brightness of the predetermined light signal, the predetermined touch-signal stream produced has a plurality of touch signals, and each of the touch signals is constituted by a high level and a low level, wherein the combination of lengths of the high levels and the low levels of the touch signals construct a predetermined pattern.

7. The peripheral device as claimed in claim 5, further comprising an output device arranged to provide an output signal according to the predetermined light signal for users, and the touch-signal generator is a conductive rubber.

8. An electronic device, outputting touch signals and receiving light signals, wherein the electronic device comprises:
a touch-sensing device, arranged to receive a predetermined touch-signal stream from a first peripheral device;
a display device, arranged to produce a predetermined light signal and transmit the predetermined light signal to the first peripheral device; and
a processing unit, arranged to read the predetermined touch-signal stream and operate in response to the predetermined touch-signal stream.

9. The electronic device as claimed in claim 8, wherein the electronic device further comprises a storage device arranged to store a plurality of predetermined patterns, wherein the processing unit is further configured to determine the whether the predetermined touch-signal stream received from the first peripheral device meets one of the predetermined patterns for identifying the first peripheral device.

10. A communication method, applied to a communication system, comprising:
receiving an initial touch signal form a first peripheral device when a first peripheral device is placed on an interactive surface;
producing an initial light signal and transmitting the initial light signal to the first peripheral device when the initial touch signal is received; and
determining whether a predetermined touch-signal stream is received from the first peripheral device after the initial light signal is transmitting to the first peripheral device.

11. The communication method as claimed in claim 10, comprising:
reading the predetermined touch-signal stream when the predetermined touch-signal stream is received from the first peripheral device, and determining whether the pattern of the predetermined touch-signal stream meets one of a plurality of predetermined patterns; and
determining that the first peripheral device is one of the peripheral devices compatible with the electronic device when the predetermined touch-signal stream meets a first predetermined pattern of the plurality of predetermined patterns.

12. The communication method as claimed in claim 11, wherein the predetermined touch-signal stream produced by the first peripheral device has a plurality of touch signals, and each of the touch signals is constituted by a high level and a low level, wherein the combination of lengths of the high levels and the low levels of the touch signals construct the first predetermined pattern.

13. The communication method as claimed in claim 11, wherein the step of determining whether the pattern of the predetermined touch-signal stream meets one of the plurality of predetermined patterns further comprises determining whether the pattern of the predetermined touch-signal stream meets one of the plurality of predetermined patterns according to an identification table, wherein the identification table is arranged to store a corresponding relationship between the predetermined patterns and the plurality of peripheral devices compatible with the electronic device and applications of the predetermined patterns, wherein the peripheral devices comprise the first peripheral device.

14. The communication method as claimed in claim 11, further comprising producing a predetermined light signal and transmitting the predetermined light signal to the first peripheral device after determining the first peripheral device is one of the peripheral devices compatible with the electronic device.

15. The communication method as claimed in claim 14, wherein the predetermined light signal is arranged to enable the first peripheral device to stop producing the predetermined touch-signal stream and enable the first peripheral device to produce an output signal, wherein the output signal represents the first peripheral device successfully connecting to the electronic device.
